Europäisches Patentamt

European Patent Office

Office européen des brevets

(11) Publication number: **0 069 253**
**B2**

(12) **NEW EUROPEAN PATENT SPECIFICATION**

(45) Date of publication of the new patent specification: **13.06.90**

(51) Int. Cl.[5]: **G 01 F 1/68**

(21) Application number: **82105235.4**

(22) Date of filing: **15.06.82**

(54) Thermal flow rate sensor.

(30) Priority: **19.06.81 JP 95061/81**

(43) Date of publication of application:
**12.01.83 Bulletin 83/02**

(45) Publication of the grant of the patent:
**09.01.85 Bulletin 85/02**

(45) Mention of the opposition decision:
**13.06.90 Bulletin 90/24**

(84) Designated Contracting States:
**CH DE FR GB IT LI NL SE**

(56) References cited:
**DE-A-2 728 060**
**DE-A-2 804 850**
**GB-A-2 034 482**
**JP-A-5 075 948**
**US-A-2 870 305**
**US-A-3 900 819**
**US-A-4 024 761**

**Journal of Basic Engineering (Transactions of the ASME), USA, Sept.1960, S.C.Ling, pp.629-634**

**The file contains technical information submitted after the application was filed and not included in this specification**

(73) Proprietor: **Hitachi, Ltd.**
**5-1, Marunouchi 1-chome**
**Chiyoda-ku Tokyo 100 (JP)**

(72) Inventor: **Ueno, Sadayasu**
**847-33, Ichige**
**Katsuta-shi (JP)**

(74) Representative: **Patentanwälte Beetz sen. - Beetz jun. Timpe - Siegfried - Schmitt-Fumian**
**Steinsdorfstrasse 10**
**D-8000 München 22 (DE)**

(56) References cited:
**VEB-Verlag Technik Berlin, May 1974, H.Strickert, "Hitzdraht- und Hitzfilmanemometrie", pp.62,63 and 175**

**Rev.Sci.Instrum.,Vol.45, Febr.1974,No.2, F.Y.Sorrell and G.V.Sturm, "An alternate to hot film flow sensors", pp.300-301**

EP 0 069 253 B2

# Description

## Background of the Invention

The present invention relates to a thermal flow rate sensor and, more particularly, to novel construction of the thermal flow rate sensor of the type having an insulating substrate of alumina or the like material and provided with a thin metallic layer of a resistance film so that the flow rate of a fluid in which the sensor is placed is sensed in the form of an electric signal/corresponding to the rate of radiation of heat from the resistance film, the thermal flow rate sensor being used in the measurement of intake air flow rate in an automotive engine.

Hot-wire type thermal flow rate sensor is known as a flow rate sensor in which the rate of discharge of the heat from a resistor is detected as the sensor output. A typical conventional thermal flow rate sensor of hot wire type incorporates a cylindrical member made of alumina or the like insulating material and a thin metallic wire of platinum or the like wound on the outer peripheral surface of the cylindrical member, the winding being connected at its both ends to rod-shaped leads which are fixed to terminals and made of a material such as platinum. This conventional hot wire type sensor is not adapted for mass-production because the production process includes a coil winding step and, in addition, the production cost is raised inconveniently due to the use of expensive materials. Furthermore, the conventional hot wire type sensor incorporating the winding of thin metallic wire inconveniently responds equally to both of normal flow and reversing flow because the resistance wire is wound spirally around the peripheral surface of the cylindrical insulating member. Therefore, when this type of sensor is used in the measurement of the intake air flow rate in, for example, automotive engine, the sensor operates to measure not only the normal intake air flow but also the reversing flow of air from the engine, so that an output greater than that of the actual intake air flow rate is obtained undesirably.

In order to overcome the above-described shortcomings of the conventional winding type thermal flow rate sensor, such a thermal flow rate sensor has been proposed as having an insulating substrate on which printed is a thin film of a temperature-varying resistance layer connected at its both ends to terminals. This type of flow rate sensor can be mass-produced efficiently and economically by an effective use of the technic for producing IC (Integrated Circuit).

"Journal of Basic Engineering", Sept. 1960, pages 629—634, and US—A—28 70 305 disclose rod-like substrates of cylindrical cross section which are tapered toward their end impinged by the forwarding fluid flow and covered with a resistance film layer, the rod-like substrates being parallel to said fluid flow.

Strickert "Hitzdraht- und Hitzfilmanemometrie", Berlin 1974, pages 62, 63, 175 discloses a similar resistance film covered rod-like substrate whereof the heat losses dependant on inclination angles with respect to the fluid flow were measured.

DE—A—27 28 060 discloses a plate-like substrate having a resistance layer thereon provided parallel to the fluid flow.

US—A 4,024,761 and US—A—3,900,819 disclose, on the opposite sides of a support member, substrate cylinders upon the entire peripheral surfaces of which are deposited coatings of platinum. Even if the plane containing the axes of the substrate cylinders is angularly arranged relative to the fluid flow, the problems of sensing also the reversing flow of the engine and of foreign matters being deposited on the platinum coatings cannot be solved.

DE—A—28 04 850 discloses a sensor in which a plate-like insulator is held at one end thereof and a metallic layer is formed on the rear side of the insulator as viewed in the direction of fluid flow. Such manner of supporting the insulator as a cantilever is disadvantageous in terms of mechanical strength, and said sensor type cannot be applied to an engine because of forming the metallic layer on the rear side of the insulator relative to the fluid flow direction and because of foreign matters being attached thereto.

A type of flow rate sensor having a plate-like substrate with a thin film resistance thereon may operate with a high sensitivity when the sensor is installed such that the surface of the substrate extends perpendicularly to the direction of flow of the fluid, but suffers a problem that the heat transfer coefficient is gradually changed during long use due to attaching of foreign matters conveyed by the fluid to the surface to deteriorate the accuracy of sensing. This problem is serious particularly when the sensor is used for sensing the intake air flow rate to an automotive engine, because the dusts and oil mist suspended by the intake air passed through an air cleaner, as well as carbon particles suspended by the reversing flow of gas from the engine, heavily attach to the surface of the resistance body to deteriorate the accuracy of the output signal to cause an error in the engine control which is conducted in accordance with the output signal from the sensor.

The attaching of the foreign matters to the resistor surface can be minimized by installing the sensor such that the surface of the printed board is positioned in parallel with the direction of flow of the fluid. This, however, is accompanied by a reduction in the sensitivity. In addition, the demand for countermeasure for correcting the sensing error due to the reversing flow from the engine applies also to the case of the printed board type sensor.

JP Pat. Appl. 50759/48 discloses a thermal flow rate sensor comprising a substrate of a metallic material, an insulating $SiO_2$-material formed on said substrate, and a thin metallic resistance film formed on said insulating material. With such arrangement, only the rear surface of the substrate opposite to the surface thereof on which the thin metallic resistance film is formed is exposed to fluid flow, and a change in the rate of discharge of heat depending on the fluid flow velocity is detected as an output of the sensor. Thus, the sensor is of an indirect detection type.

Review of Scientific Instruments, Vol. 45 (1974), No. 2, pages 300—301, discloses an arrangement in which a resistor is formed on an inclined surface part of a substrate which is formed of a ceramic material and held in parallel to the fluid flow direction. With such arrangement, the substrate is relatively increased in thickness, and it is necessary to form the inclined surface part with high accuracy which is actually difficult. In addition, the substrate is increased in volume to make its heat capacity large, thereby making the characteristics of response unfavorable.

Summary of the Invention

Acordingly, it is an object of the invention to provide a thermal flow rate sensor capable of eliminating the problems or drawbacks of conventional hot wire type flow rate sensor or printed board type flow rate sensor.

Another object of the invention is to provide a thermal flow rate sensor adapted for mass-production and capable of minimizing errors in measurement attributable to the reversing flow from automotive engine and effectively minimizing the attaching of foreign matters.

To these ends, according to the invention, there is provided a thermal flow rate sensor for measurement of intake air flow rate in an automotive engine, comprising a substrate of an insulating material in the form of a plate, a temperature-varying resistance film layer formed on said substrate and terminals connected to both ends of the resistance film layer, characterized by the opposite ends of the substrate being mechanically supported by the terminals, said resistance film layer being formed on the upstream side surface of said substrate as viewed in the direction of flow of said fluid, said substrate being mounted at an inclination angle ranging between 30 and 60° to a plane perpendicular to the direction of flow of said fluid, and the upstream side edge of said substrate being chamfered so as to be in parallel with the direction of flow of said fluid.

The thermal flow rate sensor in accordance with the invention, when used in the measurement of intake air flow rate in an automotive engine, can effectively eliminate the attaching of foreign matters such as mist of oil which is applied to the air cleaner for improving the dust arresting performance, fine dust particles suspended by the air and carbon particles carried by the gas blown back from the engine and, hence, can operate at a high accuracy to ensure a safe and smooth control of the engine. Namely, it is possible to effectively eliminate errors in engine control attributable to the attaching of foreign matters.

According to the invention, the angle of inclination of the sensor element with respect to the aforementioned reference position is selected to fall within a predetermined range of between 30 and 60° to provide dual effect of high sensitivity for flow rate measurement and prevention of deterioration of accuracy of output attributable to the attaching of foreign matters. Furthermore, the flow rate sensor of the invention is much less sensitive to the reversing flow of fluid caused by pulsation or blow back, because the resistance layer is formed only on the upstream side surface of the substrate. As a result, the undesirable output error of deterioration in the accuracy of output attributable to the sensing of reversing flow can be eliminated advantageously. For the same reason, the contamination of the reverse side of the sensor element attributable to a backfire of the engine is avoided effectively when the flow rate sensor of the invention is used in the measurement of intake air flow rate in automotive engine.

Brief Description of the Drawings

Fig. 1 is a plan view of a thermal flow rate sensor in accordance with an embodiment of the invention;

Fig. 2 is a side elevational view of the thermal flow rate sensor as shown in Fig. 1;

Fig. 3 is a graph showing heat transfer index and output changing rate in relation to the angle of inclination of the sensor element;

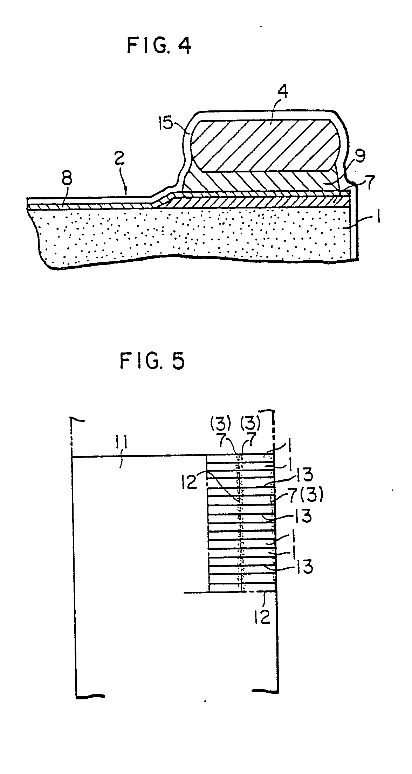

Fig. 4 is a sectional view taken along the line IV—IV of Fig. 1; and

Fig. 5 is an illustration of a part of a process for producing the thermal flow rate sensor in accordance with the invention.

Description of the Preferred Embodiment

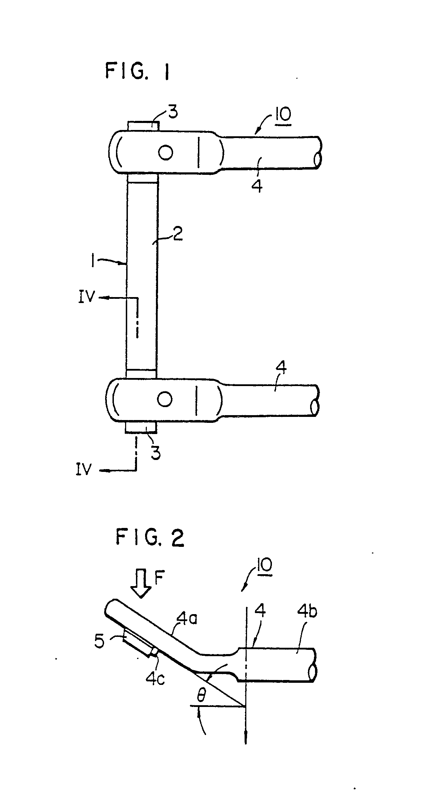

Referring to Fig. 1, there is shown a thermal flow rate sensor 10 in accordance with an embodiment of the invention. The flow rate sensor 10 has a substrate 1 made of an insulating material such as alumina, a plate-like sensor element 2 formed on the substrate 1, electrodes 3 and formed on the substrate 1 and disposed adjacent both ends of the sensor element 2 and a pair of terminals 4 made of a stainless steel and fixed to both ends of the substrate in electric contact with the electrodes.

Each of the terminals 4 is made of, for example, a stainless wire which is pressed to be flattened at its one end to form a flat portion 4a which is bent at a predetermined angle θ to the longitudinal axis of the rod-shaped portion 4b. The flat portion 4a of the terminal 4 is provided with a projection 4c for the positioning of the substrate 1. The other end of the rod-shaped portion 4b is electrically connected to the input terminal of an electric circuit for actuating a thermal flow rate sensor.

The plate-like sensor element 2 takes a strip-like form having a thickness of, for example, 0.2 mm, width of 1 to 1.5 mm and length of 6 to 10 mm, and is joined to the lower side of the flat end portion 4a of the terminals 4 by brazing with, for example, copper.

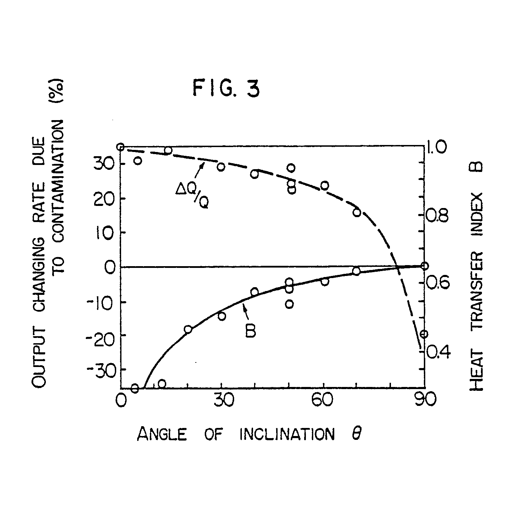

As will be seen from Fig. 2, when the flow rate sensor is installed such that the rod-shaped portions 4b of the terminals 4 extend perpendicularly to the direction of flow of fluid, the sensor element 2 is inclined at an angle θ to the direction which is perpendicular to the direction F of flow of the fluid. The inclination angle θ should be determined taking into account both of the required sensitivity and prevention of attaching of foreign matter particles, and is usually selected to range between 30 and 60°. As will be understood from Fig. 3, the present inventors have found that the inclination angle θ of about 45° provides a good result when the flow rate sensor of the invention is used for the measurement of intake air flow rate to automotive engine. As will be clearly understood from Fig. 3, the heat transfer index B is increased as the inclination angle θ is increased but the output changing rate $\Delta Q/Q$ of the flow rate sensor is decreased as the inclination angle is increased.

As shown in Fig. 2, the sensor element 2 and the substrate 1 are chamfered at their upstream side end surface 5 to present a surface parallel to the direction of flow of the fluid to minimize the sensing error attributable to turbulent flow of fluid, e.g. generation of vortices, around the end surface 5.

The substrate 1 shown in Figs. 1 and 2 is a ceramic plate of about 0.2 mm thick, made of a ceramic material such as alumina ($Al_2O_3$), silica ($SiO_2$) and magnesia ($MgO$). Each of the electrodes 3 formed on both ends of one side of the substrate 1 includes a baked layer 7 of about 10 μm thick made of a mixture powder of molybdenum (Mo) and manganese (Mn) and a nickel layer 8 formed on the Mn-Mo layer 7. The baking metallizing treatment for forming the layer 7 from the mixture powder of molybdenum and manganese is conducted, for example, by maintaining the mixture at 1300°C for 1 hour in a reducing atmosphere consisting of hydrogen and nitrogen gases. By this metallizing treatment, the atoms of metals are diffused across the interface of the Mn-Mo layer 7 and the insulating substrate 1 to form an intermediate layer through which the Mn-Mo layer is united to the substrate 1. The layer 8 of nickel is formed by a metallizing treatment to have a thickness of about 5 μm, over the entire area of one side of the substrate 1, subsequently to the formation of the Mn-Mo layer 7. The portion of the nickel layer 8 formed directly on the substrate 1 serves as the sensing element 2 in the form of a temperature-varying resistance layer. Alternatively, the resistance layer may be formed of another metal such as platinum. The metallizing of the nickel powder is made by changing the nickel particles into crystals by heating and maintaining the same in a reducing atmosphere of a temperature of, for example, 1100°C. The nickel layer 8 is united partly to the substrate 1 and partly to the Mn-Mo layer 7 through respective intermediate layers (alloy layers) formed as a result of mutual diffusion of atoms. The nickel layer, i.e. the resistance film 8, is thus formed.

The Mn-Mo layer 7 and both end portions of the resistance film 8 superposed on the Mn-Mo layer form the electrodes 3 which are bonded to the terminals 4 by brazing with copper as at 9. It is possible to use gold or silver as the brazing metallic material. The brazing material is selected taking into account the affinity or wettability to the stainless steel used as the terminal material and the nickel used as the material of the resistance layer. From this point of view, copper is preferably used in the described embodiment. It is also possible to employ spot welding in place of the brazing for bonding the electrodes to the terminals.

After the bonding of the terminals 4 to the electrodes 3, the whole area of the upstream-side of the thermal flow rate sensor 10 is coated with a glass coating layer 15.

Referring now to Fig. 5, there is shown a step of process for forming the sensor element 2 and the electrodes 3 on the ceramic substrate 1. A green sheet having a thickness of, for example, 0.2 mm is formed by rolling a blank insulating sheet of a ceramic material such as alumina, and is cut as explained below to provide a multiplicity of substrates 1. The baking metallizing treatment of molybdenum-manganese mixture powder is conducted on the portions of the green sheet 11 corresponding to the electrodes 3, in each unit area of the green sheet 11 corresponding to a single substrate 1. The metallizing treatment is conducted on the successive regions as shown in Fig. 5 so that this treatment can be made easily by ordinary process for forming printed boards. After the formation of the Mn-Mo layer 7, the nickel layer 8 is formed over the entire area of one surface of the green sheet 11 by a metallizing treatment. Subsequently to the formation of the nickel layer 8, the green sheet 11 is cut into pieces along the lines 13 of cutting by means of a laser beam, thereby to form a multiplicity of independent substrate 1 each having a sensor element 2 and electrodes 3. The production process explained in connection with Fig. 5 permits the adoption of the known process for producing printed circuit board such as IC thereby to facilitate the mass-production of the sensor elements 2. Therefore, the thermal flow rate sensor 10 in accordance with the invention is much more suitable for the mass-production than the conventional winding type hot wire sensor. In addition, the hot flow sensor in accordance with the invention does not necessitate the use of leads of expensive materials such as platinum, so that the cost of material is lowered remarkably. In consequence, according to the invention, it is possible to remarkably reduce the production cost of the flow rate senetion cost of the flow rate sensor.

Although the invention has been described with specific reference to the thermal flow rate sensor, the sensor of the invention can be used in place of conventional cold wire sensors by being applied to a resistor for temperature compensation. Namely, the temperature compensation resistor serves to detect the temperature of the flowing fluid, e.g. intake air temperature in case of an automotive engine, and, hence, the requirement for the exclusion of sensing of reversing flow is not so severe as compared with the hot wire sensor for detecting the flow rate. The construction of the thermal flow rate sensor of the invention can be directly used as the temperature compensation resistor although the resistance value of the resistor may be changed adequately.

## Claim

A thermal flow rate sensor for measurement of intake air flow rate in an automotive engine, comprising a substrate (1) of an insulating material in the form of a plate, a temperature-varying resistance film layer (2) formed on said substrate (1) and terminals (4) connected to both ends of the resistance film layer (2), characterized by the opposite ends of the substrate (1) being mechanically supported by the terminals (4), said resistance film layer (2) being formed on the upstream side surface of said substrate (1) as viewed in the direction (F) of flow of said fluid, said substrate (1) being mounted at an inclination angle (θ) ranging between 30 and 60° to a plane perpendicular to the direction (F) of flow of said fluid, and the upstream side edge of said substrate (1) being chamfered so as to be in parallel with the direction (F) of flow of said fluid.

## Patentanspruch

Thermischer Strömungsfühler zum Messen des Ansaugluftdurchsatzes in einem Kraftfahrzeugmotor, umfassend ein Substrat (1) aus einem Isolierstoff in Form einer Platte, einen auf dem Substrat (1) gebildeten, sich mit der Temperatur ändernden Widerstandsfilm (2), und mit beiden Enden des Widerstandsfilms (2) verbundene Anschlüsse (4), dadurch gekennzeichnet, daß die entgegengesetzten Enden des Substrats (1) durch die Anschlüsse (4) mechanisch abgestützt sind, der Widenstandsfilm (2), in Fluidströmungsrichtung (F) gesehen, auf der aufstromseitigen Oberfläche des Substrats (1) gebildet ist, das Substrat (1) unter einem Neigungswinkel (θ) zwischen 30 und 60° zu einer zur Fluidströmungsrichtung (F) senkrechten Ebene angeordnet ist, und der aufströmseitige Rand des Substrats (1) so abgeschrägt ist, daß er parallel zur Fluidströmungsrichtung (F) verläuft.

## Revendication

Capteur thermique de débit pour la mesure du débit d'air d'admission dans un moteur d'automobile, comprenant un substrat (1) réalisé en un matériau isolant se présentant sous la forme d'une plaque, une couche (2) formée d'une pellicule formant résistance variable en fonction de la température et formée sur ledit substrat (1) et des bornes (4) raccordées aux deux extrémités de la couche (2) formée d'une pellicule formant résistance, caractérisé en ce que les extrémités opposées du substrat (1) sont supportées mécaniquement par les bornes (4), que ladite couche (2) formée d'une pellicule formant résistance est formée sur la surface, située le côté amont, dudit substrat (1), lorsqu'on regarde dans la direction (F) d'écoulement du fluide, que ledit substrat (1) est installé en étant incliné d'un angle (θ) compris entre 30 et 60° par rapport à un plan perpendiculaire à la direction (F) de l'écoulement dudit fluide, et que le bord, situé sur le côté amont, dudit substrat (1) est chanfreiné de manière à être parallèle à la direction (F) d'écoulement dudit fluide.

FIG. 1

FIG. 2

FIG. 3

FIG. 4

FIG. 5